# EUROPEAN PATENT SPECIFICATION

(11) **EP 2 070 768 B1**
(45) Date of publication and mention of the grant of the patent: **12.05.2010**
(21) Application number: 07460037.0
(22) Date of filing: 12.12.2007
(51) Int. Cl.: B60R 11/02

(54) **A portable electronic device holder, especially for a dashboard of a car**
Halter für ein tragbares elektronisches Gerät, speziell für ein Fahrzeugarmaturenbrett
Support de dispositif électronique portable, spécialement pour un tableau de bord de véhicule

(43) Date of publication of application: 17.06.2009
(73) Proprietor: BURY Sp. z o.o., 39-300 Mielec (PL)
(72) Inventor: Bury, Henryk, 39-300 Mielec (PL)
(74) Representative: Kaminski, Zbigniew

(56) References cited:
- EP-A- 1 048 968
- DE-A1-102006 008 420
- DE-U1-202005 019 023
- JP-A- 2003 220 896
- JP-A- 2007 269 205

## Description

This invention relates to a portable electronic device holder, especially for a dashboard of a car, provided with a mounting plate, which sits rotatably in the holder and which to the portable device is mounted.

The German utility model No. DE-GM 203 13 215 U1 discloses a holder for mounting any device, especially in a car, which includes a suction cup mounted to a smooth surface within the car and a mounting plate that is attached to the suction cup with a hinged joint and the device is mounted to this plate. On the external surface of the holder there is a button to mount the suction cup and handwheels to adjust the angle, at which the device has to be mounted to the dashboard of the car. The holder is also provided with an additional mount, which enables fixing the holder to a desired surface within a car.

The published international PCT application No. WO 2007/10023 9A1 describes a navigation device and the method to mount it within a car. This device includes a base that ends with a suction cup or is inserted into a hole made e.g. in the dashboard of a car and a mounting arm, which sits rotatably in the said base and accommodates a navigation device, whereas the said arm is slideably supported on a curved block to enable setting a desired angle, at which the navigation device is inclined to the horizontal plane.

The German utility model No. DE GM 297 07 123 U1 describes a holder for mounting various devices within a car. The said holder includes a first plate mounted to a desired surface within a car by mean of screws and a mounting plate, which is attached to the first plate with articulated arms. The device, e.g. a mobile phone, is mounted to the mounting plate.

A similar device for mounting a mobile phone within a car is disclosed by the US patent No. 5 187 744 and the US patent No. US6315255D1.

A major inconvenience of portable electronic device holders with suction cups, as known in the state of the art, is that such holders do not ensure a firm mounting to a smooth surface within a car since in most cases these surfaces show a certain degree of roughness. On the other hand, other holders, used for this purpose, need affecting the integrity of the surface within a car, to which the holder is mounted, for example by drilling holes to mount the base of the holder or to drive screws into it.

It is an objective of the invention to provide a holder for mounting portable electronic devices, especially to a dashboard of a car, which will not affect the integrity of the dashboard, will enable positioning the electronic device at a desired angle from the horizontal plane, as well as it should allow mounting portable electronic devices of a large size, e.g. navigation devices with a conveniently big display, set at a desired angle from the horizontal plane. Such a holder is described in document JP-A-2007269205 which disclosed the preamble of claim 1.

According to the invention there is provided a holder for mounting portable electronic devices, especially to the dashboard of a car, characterised in that it is provided with a base with a lower plate, which shape is.adapted to that of the dashboard of a car, the said base having a cavity to accommodate a console, to which a mounting plate with a motor is attached rotatably and axially. The electronic device is mounted to the mounting plate. The bottom surface of the base is detachably glued to the dashboard of a car, for example by means of a double-side silicone adhesive tape.

The holder console, according to the invention, is provided with a frame inserted into the cavity in the base and accommodating the shaft of the mounting plate, whereas the space between the arms of the frame allows placing the portable electronic device in it.

The console is provided with protrusions, whereas the base is provided with holes (or vice versa) so that the protrusions may be clamped in the holes.

The mounting plate of the holder is favourably provided with a coil return spring and a hydraulic mechanism to slow down the rotation of the mounting plate.

The hydraulic slow-down mechanism consists of a casing, which is rotatably mounted on the shaft, connected to the mounting plate and covered with a lid and filled with a high-viscosity lubricant, and of a multiple-blade rotor keyed on the shaft of the mounting plate.

The base of the holder, according to the invention, is favourably provided with a hole, through which the electric wires, connecting the holder to the car wiring system, may be drawn.

The holder console, according to the invention, is favourably provided with an antenna, especially a TMC antenna, installed in the frame.

The holder base, according to the invention, is favourably made of resilient plastic.

The mounting plate, according to the invention, is favourably provided with a first catch, which is adapted to engage with a corresponding slot in the electronic device to be mounted to the mounting plate, and with a second catch, located at its circumference, which is adapted to engage with a corresponding catch of the button in the base.

The console of the holder, according to the invention, is favourably provided with a limiter connected to a handwheel to limit the rotation of the mounting plate.

The performance tests of the holder, according to the invention, revealed its universality since the holder not only may accommodate any device, even large-size electronic ones, especially navigation devices with displays, but also it allows hiding these devices inside the holder when it is in the closed position.

Moreover, the holder may be installed without cutting or drilling holes in the surface within a car, especially in the dashboard, its assembly is easy and can be performed by the user without any tools.

The portable electronic device holder, especially for the dashboard of a car, according to the invention, is depicted in one of its embodiments on the drawing, where: Fig. 1 - shows a holder in the locked position, glued to the dashboard of a car; Fig. 2 - is an exploded view of the holder; Fig. 3 and Fig. 4 - depict the particular phases of mounting the navigation device to the mounting plate of the holder; Fig. 5 - shows the holder in the locked position with a navigation device sitting in it; Fig. 6 - presents the arrangement of the wiring connecting the holder to the car wiring system; Fig. 7 shows the position of an antenna, especially a TMC antenna, in the holder; Fig. 8 shows the holder with the mechanism, which releases the mounting plate with the motor; Fig. 9 shows another embodiment of the invention having a hydraulic slow-down mechanism, which opens the mounting plate and limits its rotational motion; Fig. 10 is an expanded view of a hydraulic slow-down mechanism.

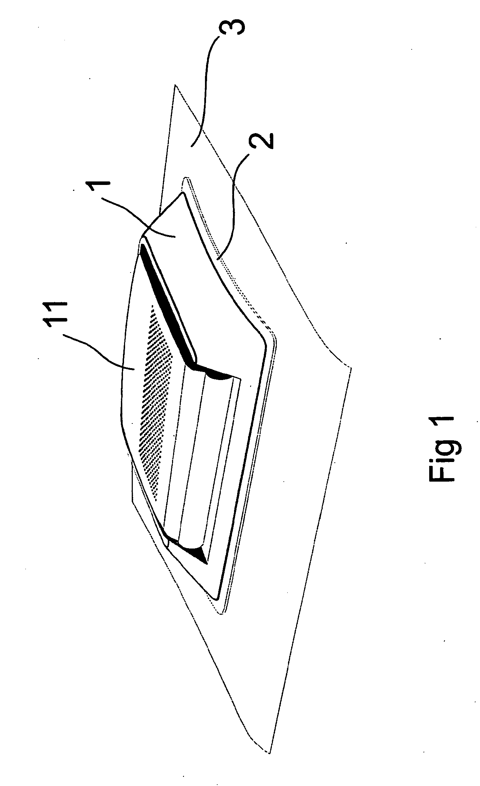

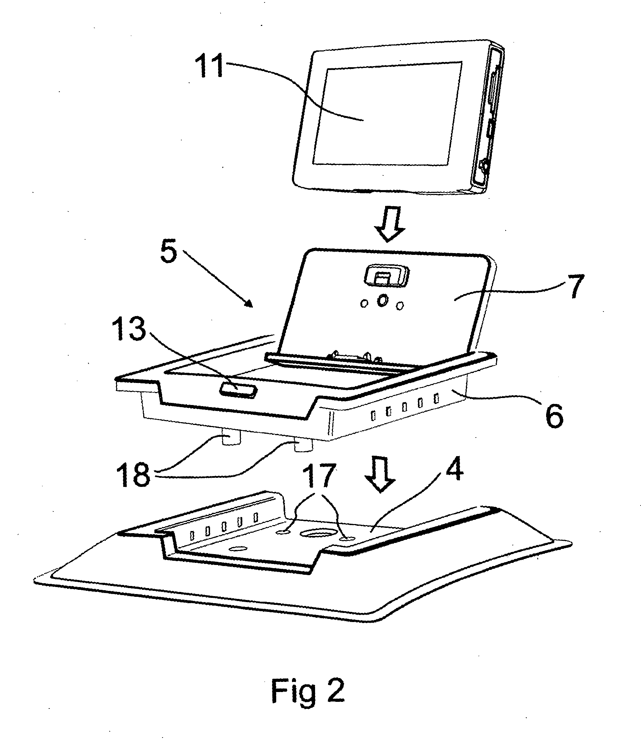

The portable electronic device holder, as depicted in the Figs. 1 and 2, for example to mount a navigation device to the dashboard of a car, consists of the following components: a base 1, which lower plate 2 has a shape adapted to the shape of the dashboard 3 of a car and is favourably glued to the dashboard with a double-sided silicon adhesive tape, and is provided with a cubicoid cavity 4, into which a console 5 is inserted. The base 1 is conveniently made of a resilient plastic, e.g. a polyvinyl chloride.
The console 5 consists of a frame 6 inserted into the cavity 4 in the base 1 and of a mounting plate 7, which sits rotatably in the frame and is provided with a motor to make it rotate, whereas the space between the frame arms 8 allows placing a portable electronic device 11 in it, mounted to the mounting plate 7. The mounting plate 7, sitting rotatably on the shaft 8, is provided with a plug 9, located in the nearby of the shaft, and a catch 10, which is adapted to engage with a corresponding slot in the electronic device 11, to mount it and to lock it in the mounting plate. On the shaft 8 of the mounting plate 7 there is mounted a motor 28 with a gear to make the amounting plate rotate. The motor 28 is controlled by an electronic module 29, which is activated when the button 13 in the frame 6 is pressed, however, the motion direction depends on the position of the mounting plate 7, i.e. on the position of motor limit switches, not shown on the drawing.

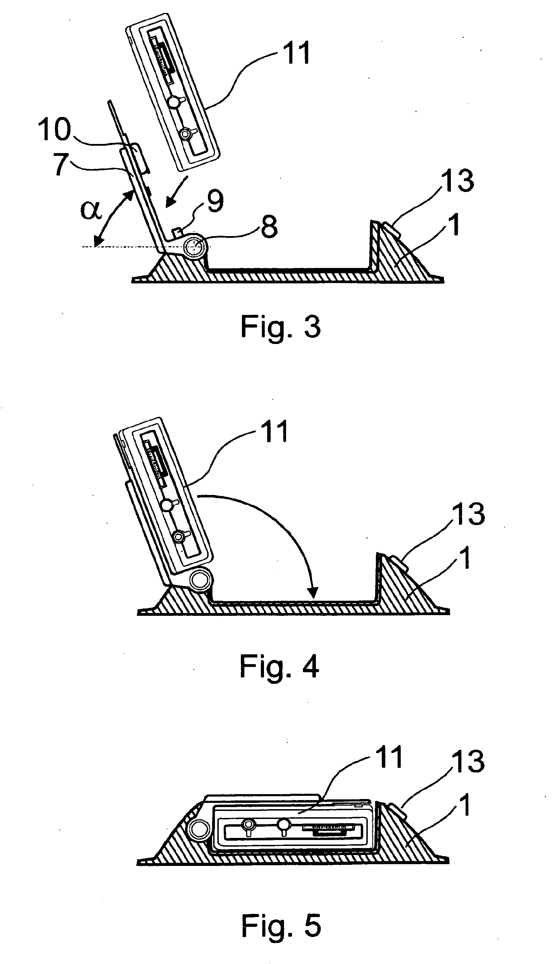

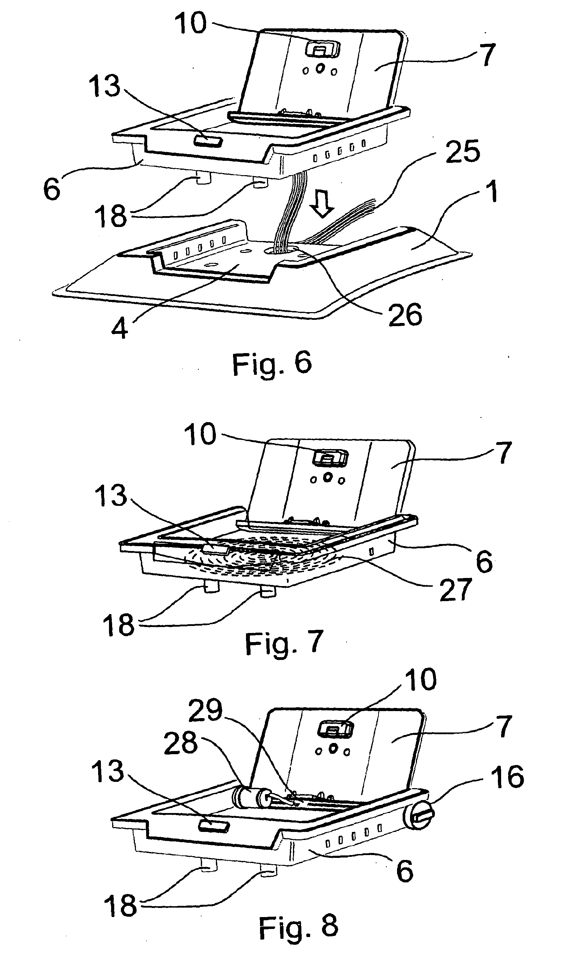

The Figs. 3 to 5 show the method to mount the electronic device 11, for example a navigation device, in the mounting plate 7. The device 11 moves across the mounting plate 7, its slot is driven onto the plug 9 and then is pressed down towards the mounting plate 7, which results in that the catch 10 engages with a corresponding slot in the base of the device 11 and locks it in a set position. To close the mounting plate 7 with the electronic device 11 in it, it is necessary to push the button 13, which activates the electronic module 29 controlling the motor 28 (Fig. 8). To open the mounting plate 7 it is necessary to push the button 13 again.

When open, the mounting plate is inclined to the horizontal plane at a set a angle. To set the a angle a limiter of the rotation of the mounting plate 7 is used, connected with the handwheel 16.

In order to mount the console 5 firmly the base 1 is provided with holes 17 and the console is provided with protrusions 18, which are clamped in these holes (or vice versa).

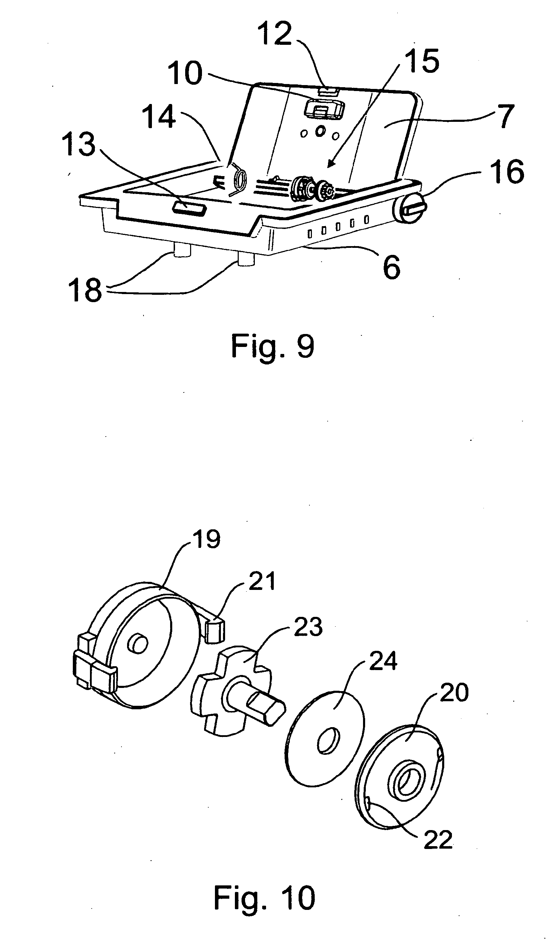

In another embodiment, as depicted on the Fig. 9, to close and open the mounting plate 7 manually there is provided a hydraulic slow-down mechanism 15, connected to the mounting plate, and the catch 12 engages with the button 13 of the frame 6. In order to close the mounting plate, it can be rotated manually around the shaft 8 and the catch 12 engages with the corresponding slot of the button 13, thus closing the holder. To open the mounting plate 7 with the electronic device 11 in it, it is necessary to push the button 13 to release the catch 12 and the coil return spring 14 makes the mounting plate 7 rotate, slowed down by the hydraulic mechanism 15 and thus opens the mounting plate 7.

The hydraulic slow-down mechanism, as depicted in the Fig. 10 in an exploded view, consists of a casing 19, which is connected to the mounting plate 7, sits rotatably on the shaft 8 of the mounting plate 7 and is provided with catches 21 that are adapted to engage with the slots 22 in the cover 20. The space inside the casing 19 is filled with a high-viscosity lubricant, in which a multiple-blade rotor 23 rotates, keyed on the shaft 8.
The gasket 24 is provided to seal the casing 19.

The Fig. 6 shows the arrangement of the wiring 25, which connect the holder and the wiring system of the car. The hole 26 is provided in the holder base 1 to drive the wiring through it.

The Fig. 7 shows the arrangement of an antenna, especially a TMC antenna 27, within the console 5 of the holder.

The assembly of the holder, according to the invention, and mounting it to the external surface of the dashboard 3 of a car consists of removing the paper protective strip from the double-sided silicone adhesive tape and pressing the base 1 to the surface of the dashboard 3. Then, the wiring 25 is driven through the hole 26 in the base 1 and connected to the relevant cables in the car wiring system. Next, the console 5 is pressed down so that its protrusions 18 move into the slots 17 in the base 1. Then, the desired portable electronic device 11 is mounted to the mounting plate as described earlier. When the car is not moving it is useful to close the mounting plate 7 to a position as shown in the Fig. 5, so that the device is hidden completely.

Opening or closing the holder with a motor, according to the invention, may be executed automatically by turning the key in the ignition switch, which electric system controls the electronic module 29.

The holder, according to the invention, may be used in various types of cars, which may require replacing the base 1 with the one fitting to the shape of the dashboard in a particular car. To make the replacement it is necessary to remove the base 1 from the dashboard and a new base is glued to the dashboard with a double-sided adhesive tape.

This description discloses one embodiment of the holder according to the invention. Within the scope of the protection there are also different design modifications and changes provided that these modifications and changes are consistent with the idea of this invention and are within the scope of the claims.

## Claims

1. The portable electronic device holder, especially to the dashboard of a car, provided with a mounting plate (7), which sits rotatably in the holder and to which a portable device (11) is mounted, **characterized in that** it has a base (1), which lower plate (2) has a shape adapted to the shape of the dashboard (3) of a car and is provided with a cavity (4), into which a console (5) is inserted, provided with a mounting plate (7), which sits rotatably in the console and a motor (28), whereas the portable electronic device (11) is mounted to the mounting plate (7) and the lower plate (2) of the base (1) is detachably glued to the dashboard (3) of a car.

2. The holder according to Claim 1, wherein the lower plate (2) of the base (1) is glued to the dashboard (3) of a car by means of a double-side silicone adhesive tape.

3. The holder according to Claim 1, wherein the holder console (5) is provided with a frame (6) inserted into the cavity (4) in the base (1) and accommodating the shaft (8) of the mounting plate (7), whereas the space between the arms of the frame allows hiding the portable electronic device in it.

4. The holder according to Claim 1, wherein the console (5) is provided with protrusions (18), whereas the base (1) is provided with holes (17) (or vice versa) so that the protrusions may be clamped in the holes (17).

5. The holder according to Claim 1, wherein the mounting plate (7) is provided with a coil return spring (14) and a hydraulic slow down mechanism (15), which is filled with a high-viscosity lubricant and causes the rotation of the mounting plate.

6. The holder according to Claim 1, wherein the base (1) of the holder is provided with a hole (26), through which the electric wires (25), connecting the holder (1) to the car wiring system, may be drawn

7. The holder according to Claim 1, wherein the holder console (5) is provided with an antenna, especially a TMC antenna (27), installed in the frame (6).

8. The holder according to Claim 1, wherein the base (1) is made of resilient plastic.

9. The holder according to Claim 1, wherein the mounting plate (7) is provided with a catch (10), which is adapted to engage with a corresponding slot in the electronic device (11) to be mounted to the mounting plate, and with a catch (12), located at its circumference, which is adapted to engage with a corresponding catch (13) of the button in the base (1).

## Patentansprüche

1. Ein Halter zum Befestigen, insbesondere am Armaturenbrett eines Kraftwagens, eines ortsveränderlichen elektronischen Gerätes, welcher Halter mit einer an ihm drehbar befestigten Befestigungsplatte (7) versehen ist, an welche Befestigungsplatte ein ortsveränderliches elektronisches Gerät (11) zu befestigen ist, **gekennzeichnet dadurch, dass** er mit einem Gestell (1) versehen ist, welches Gestell eine Unterplatte (2) mit einer zur Gestalt des Armaturenbrettes (3) eines Kraftwagens angepassten Gestallt und eine Vertiefung (4) aufweist, in welcher Vertiefung eine mit der an ihr drehbar an der Achse (8) Befestigungsplatte (7) zusammen mit dem Motor (28) klemmbefestigt ist, wobei in der Befestigungsplatte (7) das elektronische Gerät (11) zu befestigen ist und **dadurch gekennzeichnet, dass** die Unterplatte (2) des Gestells (1) trennbar an die Oberfläche des Armaturenbrettes (3) eines Kraftwagens angeklebt ist.

2. Der Halter laut dem Anspruch 1 **dadurch gekennzeichnet, dass** die Unterplatte (2) des Gestells (1) an die Oberfläche des Armaturenbrettes (3) eines Kraftwagens mittels zweiseitigen Silikon-Klebebandes angeklebt ist.

3. Der Halter laut dem Anspruch 1 **dadurch gekennzeichnet, dass** seine Stütze (5) mit einem in der Vertiefung (4) des Gestells (1) zu befestigenden und mit der an ihm zu befestigenden Achse (8) der Befestigungsplatte (7) ausgestatteten Rahmen (6) versehen ist, wobei der Raum zwischen den Armen des Rahmens es ermöglichen soll, in ihm (Raum) das ortsveränderliche elektronische Gerät verstecken zu können.

4. Der Halter laut dem Anspruch 1 **dadurch gekennzeichnet, dass** seine Stütze (5) mit Vorsprüngen (18) und das Gestell (1) mit Löchern (17) oder umgekehrt - zu deren Klemmbefestigung in den Löchern (17) dieses Gestells.

5. Der Halter laut dem Anspruch 1 **dadurch gekennzeichnet, dass** seine Befestigungsplatte (7) mit der an ihr zu befestigenden Rückholschraubenfeder (14) und mit dem mit einem Schmiermittel von großer Viskosität gefüllten und der Platte Drehbewegung verleihenden hydraulischen Verlangsamungsmechanismus (15) ausgestattet ist.

6. Der Halter laut dem Anspruch 1 **dadurch gekennzeichnet, dass** sein Gestell (1) mit einem Loch (26) zum Durchfädeln von elektrischen Leitungen (25) ausgestattet ist,, wobei die elektrischen Leitungen diesen Halter (1) mit der elektrischern Installation des Kraftwagens verbinden.

7. Der Halter laut dem Anspruch 1 **dadurch gekennzeichnet, dass** seine Stütze (5) mit der im Rahmen (6) angebrachten Antenne , insbesondere TMC (27) Antenne, versehen ist.

8. Der Halter laut dem Anspruch 1 **dadurch gekennzeichnet, dass** sein Gestell (1) aus elastischem Kunststoff hergestellt ist.

9. Der Halter laut dem Anspruch 1 **dadurch gekennzeichnet, dass** seine Befestigungsplatte (7) mit dem Daumen (10), der mit einem entsprechenden Einschnitt des an dieser Platte zu befestigenden elektronischen Gerätes (11) zusammenwirkt und mit dem an ihrem Rand angebrachten Daumen (12), der mit einem entsprechenden Daumen des Drückknopfes (13) seiner Gestells (1) zusammenwirkt, versehen ist.

## Revendications

1. La poignée fixant un appareil éléctronique portable, surtout sur une planche porte-appareils de la voiture, équipée d'une plaque de fixation (7) montée de la manière rotative en cette poignée, à laquelle est fixé un appareil éléctronique portable (11), **caractérisée par le fait qu'**elle est équipée d'un support (1) avec une plaque inférieure (2) d'une forme adaptée à la forme d'une planche porte-appareils (3) de la voiture et ayant un bas-fond (4) dans lequel est fixée, par les clips, une console (5) avec la plaque de fixation (7) montée sur elle rotativement sur un axe (8) et un moteur (28), sinon dans la plaque de fixation (7), on met l'appareil éléctronique (11) et la plaque inférieure (2) est collée de la manière disjonctive à une surface de la planche porte-appareils (3) de la voiture.

2. La poignée, conformément à la revendication 1, **caractérisée par le fait que** la plaque inférieure (2) du support (1) est collée à une surface de la planche porte-appareils (3) de la voiture à l'aide d'un ruban adhésif double face en silicone.

3. La poignée, conformément à la revendication 1, **caractérisée par le fait que** la console (5) est équipée d'un cadre monté dans le bas-fond (4) du support (1) avec un axe (8) de la plaque de fixation (7) monté en lui, sinon un espace entre les branches du cadre doit permettre de cacher l'appareil éléctronique portable dedans elle.

4. La poignée, conformément à la revendication 1, **caractérisé par le fait que** la console (5) a des saillies (18), par contre, le support (1) a des ouvertures (17) ou inversement - pour le monatge par pinces, dans les ouvertures (17) de ce support.

5. La poignée, conformément à la revendication 1, **caractérisée par le fait que** la plaque de fixation (7) est équipée d'un ressort à boudin (14) monté sur elle et un mécanisme hydraulique ralentissant (15) rempli d'un lubrifiant d'une haute viscosité et imprimant un mouvement tourant de cette plaque.

6. La poignée, conformément à la revendication 1, **caractérisée par le fait que** le support (1) a un trou (26) pour passer les conduits électriques (25) joignant cette poignée (1) avec l'installation électrique de la voiture.

7. La poignée, conformément à la revendication 1, **caractérisée par le fait que** la console (5) est équipée d'un antenne montée dans le cadre (6), surtout l'antenne TMC 27.

8. La poignée, conformément à la revendication 1, **caractérisée par le fait que** le support (1) est fait d'un plastique flexible.

9. La poignée, conformément à la revendication 1, **caractérisée par le fait que** sa plaque de fixation (7) est équipée d'un crochet (10) travaillant avec un crochet conforme au bouton (13) de son support (1).
